# EUROPEAN PATENT APPLICATION

(11) **EP 4 059 806 A1**
(43) Date of publication of application: **21.09.2022**
(21) Application number: 20887006.3
(22) Date of filing: 14.10.2020
(51) Int. Cl.: B61L 27/00, G06F 9/48, G06F 9/50

(54) **INFORMATION PROCESSING SYSTEM AND CONTROL METHOD FOR INFORMATION PROCESSING SYSTEM**

(30) Priority: 13.11.2019 JP 2019205480
(71) Applicant: Hitachi, Ltd., Tokyo 100-8280 (JP)
(72) Inventor: MAYA, Yuzuru, Chiyoda-ku, Tokyo 100-8280 (JP); KAWASAKI, Kenji, Chiyoda-ku, Tokyo 100-8280 (JP); MOCHIZUKI, Tomoyuki, Chiyoda-ku, Tokyo 100-8280 (JP); TOMIYAMA, Tomoe, Chiyoda-ku, Tokyo 100-8280 (JP)
(74) Representative: Mewburn Ellis LLP
(86) International application number: PCT/JP2020/038754
(87) International publication number: WO 2021/095424

(57) **Abstract**

A plurality of simulations executed by a plurality of simulators, respectively, coupled to one another to perform communication are executed efficiently and fast as a whole when executed in cooperation. An information processing system stores execution order information that is information indicating execution orders of the plurality of simulations. Each of the simulators generates output data by executing a corresponding one of the simulations based on input data that is data input at execution start, and execution control of the other simulations is performed when the simulation has reached a check point at a time point halfway through execution of the simulation. The check point is set based on, for example, a viewpoint of time or a viewpoint of situation of the simulation.

## Description

### [Technical Field]

The present invention relates to an information processing system and a control method for the information processing system.

### [Background Art]

The present application is based upon and claims the benefit of priority from Japanese Patent Application No. 2019-205480, filed on November 13, 2019, the entire contents of which are hereby incorporated by reference.

PTL 1 discloses a distributed simulation system configured to achieve an efficient wide area distributed simulation while ensuring security so that unnecessary or inappropriate simulation information is prevented from being exchanged among a plurality of sites coupled to one another through a wide area network. The plurality of sites include a premises distributed simulation manager configured to refer to premises distributed simulation definition information and control communication between different-model distributed simulators, and a premises representative simulator configured to selectively publish, to the outside of the sites, simulation information that can be published to the outside, and a wide area distributed simulation manager controls communication between a site that publishes simulation information and a site that subscribes to the simulation information.

NPL 1 discloses a train-operation/traveler-behavior simulator configured to perform traveler behavior estimation, train operation estimation, inter-station travel time estimation, and consumed power amount estimation and evaluation.

### [Citation List]

### [Patent Literature]

[PTL 1] Japanese Patent Laid-open No. 2001-306538

### [Non Patent Literature]

[NPL 1] "Development of Detailed Model of Train Operation and Passenger Flow Simulation and Multicriteria Evaluation of Train Operation Plans", Yoko Takeuchi, Takashi Sakaguchi, Kazumasa Kumazawa, Taketoshi Kunimatsu, Keisuke Sato, IEEJ transactions on industry applications D 135 (4), 411-419, 2015

### [Summary of Invention]

### [Technical Problem]

A plurality of simulations often need to cooperate in prediction and evaluation on a phenomenon through a simulation by using an information processing apparatus. For example, in train operation planning, it is needed to perform evaluation at various viewpoints such as convenience for travelers who uses railway, operation cost, consumed power amount, and carbon dioxide emission amount and perform an overall simulation through cooperation of a plurality of simulations. In addition, it is needed to efficiently and fast obtain an execution result when such an overall simulation is performed.

According to PTL 1 described above, a plurality of sites are coupled to one another through a wide area network and simulation information is exchanged among the sites, but no disclosure is made on the way of reducing a time taken for a simulation. According to NPL 1, estimation and evaluation are sequentially (serially) performed for each of traveler behavior, train operation, inter-station travel time, and consumed power amount so that a subsequent simulation is executed after preceding estimation and evaluation, but when an evaluation result does not satisfy a target value, it is needed to adjust parameters and re-execute all simulations, and thus a long time is needed to obtain an execution result.

The present invention is made in view of such a background and intended to provide an information processing system with which an execution result can be obtained efficiently and fast as a whole when a plurality of simulations are executed in cooperation, and a control method for the information processing system.

### [Solution to Problem]

An aspect of the invention to achieve the above objective is an information processing system configured to execute a plurality of simulations in cooperation, the plurality of simulations being executed by a plurality of simulators, respectively, coupled to one another to perform communication, the information processing system being configured to: store execution order information that is information indicating execution orders of the plurality of simulations; and perform execution control of the simulations except for one simulation when the one simulation has reached a check point at a time point halfway through execution of the one simulation.

Other problems and solutions disclosed by the present application are clarified with reference to the section "Description of Embodiments" and the accompanying drawings.

### [Advantageous Effects of Invention]

According to the present invention, execution results can be obtained efficiently and fast as a whole when a plurality of simulations are executed in cooperation.

### [Brief Description of Drawings]

[Fig. 1] Fig. 1 is a diagram illustrating an example of a schematic configuration of an information processing system.
[Fig. 2] Fig. 2 is a diagram illustrating an example of a hardware configuration of an information processing apparatus used to implement the information processing system.
[Fig. 3] Fig. 3 is a diagram illustrating main functions of an overall control equipment.
[Fig. 4] Fig. 4 is a diagram illustrating main functions of a train operation management equipment.
[Fig. 5] Fig. 5 is a flowchart for description of integrated simulation processing.
[Fig. 6] Fig. 6 is a diagram illustrating an example of simulator information.
[Fig. 7] Fig. 7 is a diagram illustrating an example of evaluation information.
[Fig. 8] Fig. 8 is a diagram illustrating an example of execution order information.
[Fig. 9] Fig. 9 is a diagram illustrating examples of check points (CPs).
[Fig. 10] Fig. 10 is a flowchart for description of train operation simulation processing.
[Fig. 11] Fig. 11 is a flowchart for description of power simulation processing.
[Fig. 12] Fig. 12 is a flowchart for description of crew simulation processing.
[Fig. 13] Fig. 13 is a flowchart for description of fare income simulation processing.
[Fig. 14] Fig. 14 is a flowchart for description of human flow simulation processing.
[Fig. 15] Fig. 15 is a diagram illustrating another configuration of the information processing system.
[Fig. 16] Fig. 16 is a diagram illustrating another configuration example of the simulator information.
[Fig. 17] Fig. 17 is a diagram illustrating another example of the execution order information.

### [Description of Embodiments]

An embodiment of the present invention will be described below with reference to the accompanying drawings. In the description below, components having identical or similar functions may be denoted by the same reference sign, and duplicate description thereof may be omitted. A character "S" denoted in front of a reference sign indicates a processing step.

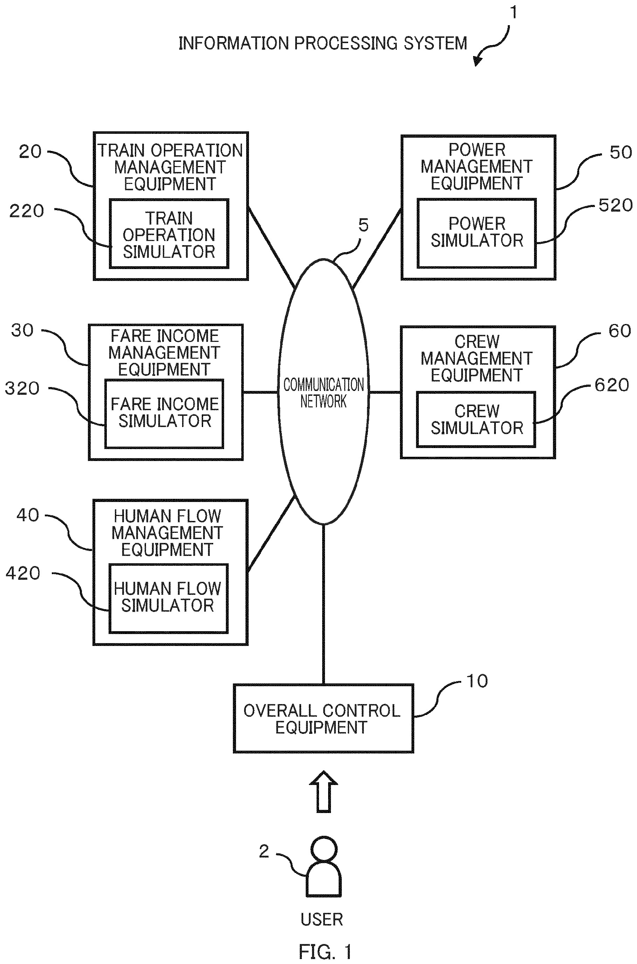

Fig. 1 illustrates an example of a schematic configuration of an information processing system 1 to be described below as an embodiment of the present invention. The information processing system 1 performs a simulation related to railway operation and outputs information related to overall evaluation of railway balance, fare income, human flow, consumed power, crew schedule, train car allocation, and the like. Note that, although such a simulation related to railway operation is exemplarily described in the present embodiment, the present invention is widely applicable to other various simulations such as simulations related to other transportation means (such as bus, airplane, and ship) and transport means and various simulations in MaaS (Mobility as a Service).

As illustrated in the drawing, the information processing system 1 includes a plurality of information processing apparatuses (a train operation management equipment 20, a fare income management equipment 30, a human flow management equipment 40, a power management equipment 50, and a crew management equipment 60) configured to perform different kinds of simulations, respectively. The information processing system 1 also includes an information processing apparatus (hereinafter referred to as an "overall control equipment 10") having functions to perform presentation of a user interface through which various settings related to simulations are performed by a user (such as an administrator), presentation of simulation results, and the like. In the description below, the train operation management equipment 20, the fare income management equipment 30, the human flow management equipment 40, the power management equipment 50, and the crew management equipment 60 are collectively referred to as a simulation apparatus in some cases.

The overall control equipment 10, the train operation management equipment 20, the fare income management equipment 30, the human flow management equipment 40, the power management equipment 50, and the crew management equipment 60 are each coupled to a communication network 5. These apparatuses can perform bidirectional communication among the apparatuses through the communication network 5. These apparatuses may be operated at the same site, or for example, may be dispersively operated at a plurality of different sites (for example, a plurality of sites of different operating bodies). The communication network 5 is, for example, a local area network (LAN), wide area network (WAN), the Internet, a public communication network, or a dedicated line.

The train operation management equipment 20 includes a train operation simulator 220. The train operation simulator 220 performs a simulation (hereinafter referred to as a "train operation simulation") related to train operation, such as timetable planning or change, for reduction of congestion due to change of passenger demand or any other purpose.

The fare income management equipment 30 includes a fare income simulator 320. The fare income simulator 320 performs a simulation (hereinafter referred to as a "fare income simulation") related to fare income.

The human flow management equipment 40 includes a human flow simulator 420. The human flow management equipment 40 performs a simulation (hereinafter referred to as a "human flow simulation") that predicts a future demand based on data such as past statistical data or latest event information and evaluates a congestion rate.

The power management equipment 50 includes a power simulator 520. The power management equipment 50 performs a simulation (hereinafter referred to as a "power simulation") related to power of each train.

The crew management equipment 60 includes a crew simulator 620. The crew simulator 620 performs a simulation (hereinafter referred to as a "crew simulation") related to generation of a crew schedule in accordance with a train car and evaluation of the binding hour of a crew.

The overall control equipment 10, the train operation management equipment 20, the fare income management equipment 30, the human flow management equipment 40, the power management equipment 50, and the crew management equipment 60 are each implemented by using an information processing apparatus (computer). Note that, two or more of these apparatuses may be implemented by using a common information processing apparatus.

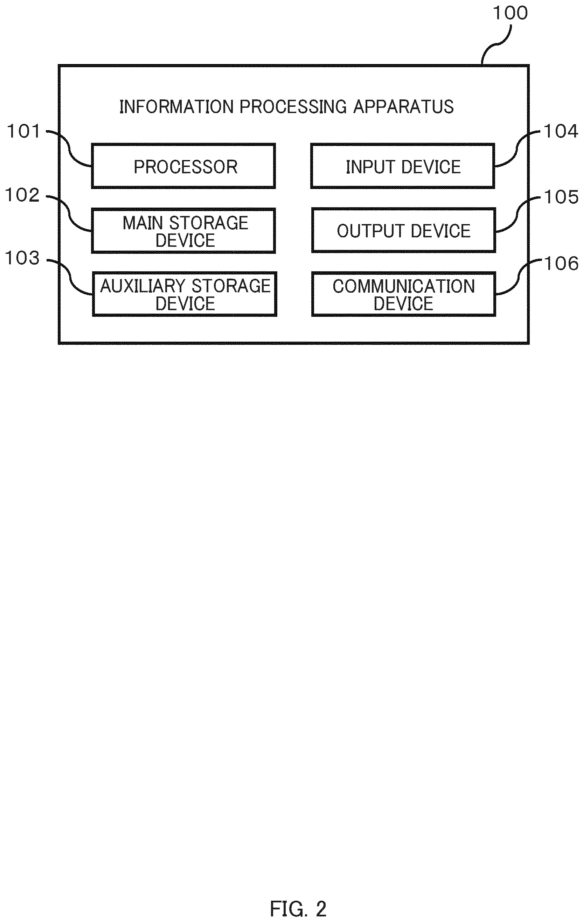

Fig. 2 illustrates an exemplary hardware configuration of an information processing apparatus used to implement each of the overall control equipment 10, the train operation management equipment 20, the fare income management equipment 30, the human flow management equipment 40, the power management equipment 50, and the crew management equipment 60.

An exemplarily illustrated information processing apparatus 100 includes a processor 101, a main storage device 102, an auxiliary storage device 103, an input device 104, an output device 105, and a communication device 106. These devices are coupled to one another to perform communication through a communication means such as a bus. Note that, the information processing apparatus 100 may be implemented by using, for example, a virtual information processing resource such as a cloud server provided by a cloud system.

The processor 101 is configured by using, for example, a central processing unit (CPU), a micro processing unit (MPU), a graphics processing unit (GPU), a field programmable gate array (FPGA), an application specific integrated circuit (ASIC), or an artificial intelligence (AI) chip.

The main storage device 102 is a device configured to store computer programs and data and is, for example, a read only memory (ROM), a random access memory (RAM), or a non-volatile memory (NVRAM).

The auxiliary storage device 103 is, for example, a solid state drive (SSD), a hard disk drive, an optical storage device (such as a compact disc (CD) or a digital versatile disc (DVD)), a storage system, an IC card, a reading-writing device for a recording medium such as an SD card or an optical recording medium, or a storage region of a cloud server. Computer programs and data can be read onto the auxiliary storage device 103 through a reading device for a recording medium or the communication device 106. Computer programs and data stored in the auxiliary storage device 103 are read onto the main storage device 102 as needed.

The input device 104 is an interface configured to receive an input from the outside and is, for example, a keyboard, a mouse, or a touch panel.

The output device 105 is an interface configured to output various kinds of information such as processing progress and a processing result. The output device 105 is, for example, a display device (such as a liquid crystal monitor, a liquid crystal display (LCD), or a graphic card) or a printing device configured to visualize the above-described various kinds of information. Note that, for example, the information processing apparatus 100 may input and output information to and from another apparatus through the communication device 106.

The communication device 106 is a device configured to achieve communication with another apparatus. The communication device 106 is a device configured to function as a wired or wireless communication interface for achieving communication with another apparatus through the communication network 5 and is, for example, a network interface card (NIC) or a wireless communication module (such as a WiFi module or a BLE module).

Functions of each of the overall control equipment 10, the train operation management equipment 20, the fare income management equipment 30, the human flow management equipment 40, the power management equipment 50, and the crew management equipment 60 are achieved by the processor 101 reading and executing a computer program stored in the main storage device 102 or by a hardware component (such as a FPGA, an ASIC, or an AI chip) included in the apparatus. For example, an operating system, a device driver, a file system, and a database management system (DBMS) (such as a relational database or a NoSQL) may be installed on the information processing apparatus 100.

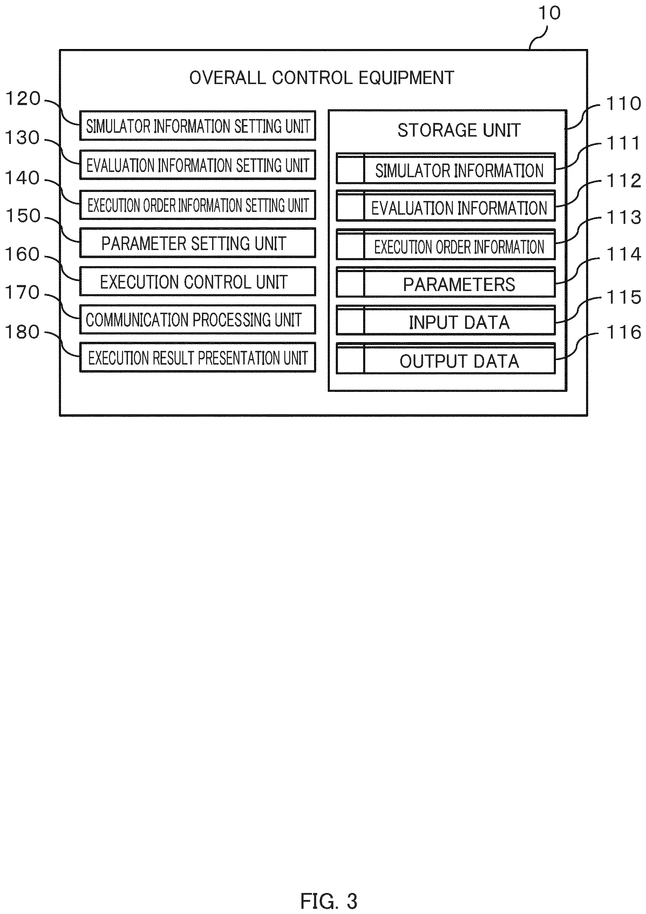

Fig. 3 illustrates main functions of the overall control equipment 10. The overall control equipment 10 has functions of a storage unit 110, a simulator information setting unit 120, an evaluation information setting unit 130, an execution order information setting unit 140, a parameter setting unit 150, an execution control unit 160, a communication processing unit 170, and an execution result presentation unit 180.

The storage unit 110 stores information (data) such as simulator information 111, evaluation information 112, execution order information 113, parameters 114, input data 115, and output data 116. The storage unit 110 stores the information as, for example, a database table provided by the DBMS or a file provided by the file system.

The simulator information setting unit 120 generates and stores the simulator information 111 as information related to each simulator in a simulation (hereinafter referred to as an "integrated simulation") executed by the execution control unit 160 in accordance with the execution order information 113 based on dialogue processing with the user through the user interface, information transferred from each simulation apparatus, or the like.

For example, while performing dialogue processing with a user 2 through the user interface, the evaluation information setting unit 130 generates and stores the evaluation information 112 as information used to evaluate an execution result of the integrated simulation.

For example, while performing dialogue processing with the user 2 through the user interface, the execution order information setting unit 140 generates and stores the execution order information 113 information related to the execution order of each simulator in the integrated simulation.

For example, while performing dialogue processing with the user 2 through the user interface, the parameter setting unit 150 generates and stores various parameters 114 to be used by each simulator when executing a simulation.

The execution control unit 160 executes the integrated simulation by, for example, transmitting a simulation execution instruction to each simulation apparatus in accordance with the execution order information 113 and generates the output data 116 as data including a result of the execution. The execution control unit 160 executes the integrated simulation with the input data 115 as input.

The communication processing unit 170 performs communication with each simulation apparatus to transmit or receive execution control information of a simulation, various kinds of information (such as various parameters and an execution result) related to the simulation, and the like.

The execution result presentation unit 180 generates the output data 116 including an execution result of the integrated simulation and outputs information based on the generated output data 116 to the output device 105.

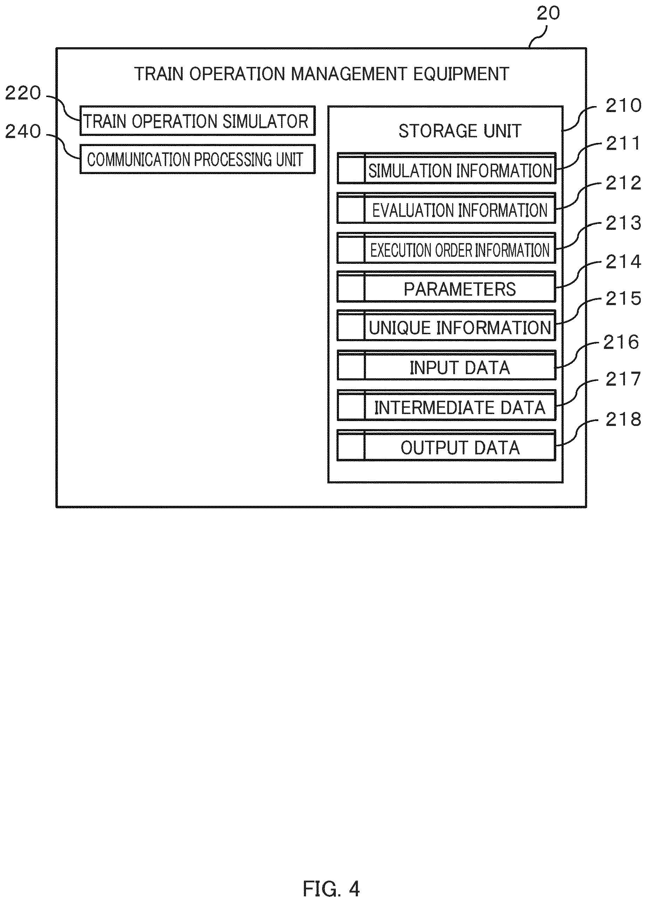

Fig. 4 illustrates main functions of the train operation management equipment 20. As illustrated in the drawing, the train operation management equipment 20 has functions of a storage unit 210, the train operation simulator 220, and a communication processing unit 240.

The storage unit 210 stores information (data) such as simulation information 211, evaluation information 212, execution order information 213, parameters 214, unique information 215 (such as an operation timetable), input data 216, intermediate data 217, and output data 218. The storage unit 210 stores the information as, for example, a database table provided by the DBMS or a file provided by the file system.

When having received an execution instruction transferred from the overall control equipment 10, the train operation simulator 220 executes the train operation simulation and generates the output data 218 including a result of the execution. The train operation simulator 220 generates the intermediate data 217 halfway through the execution of the train operation simulation.

The communication processing unit 240 performs communication with the overall control equipment 10 and each simulation apparatus and transmits or receives execution control information of a simulation and various kinds of information (such as the evaluation information 212, the input data 216, the intermediate data 217, and the output data 218) related to the simulation.

Note that, basic configurations of the other simulation apparatuses (the fare income management equipment 30, the human flow management equipment 40, the power management equipment 50, the crew management equipment 60, and a train car allocation management equipment 70) than the train operation management equipment 20 are same as that of the train operation management equipment 20 illustrated in Fig. 4 except for difference in the unique information 215 and the like.

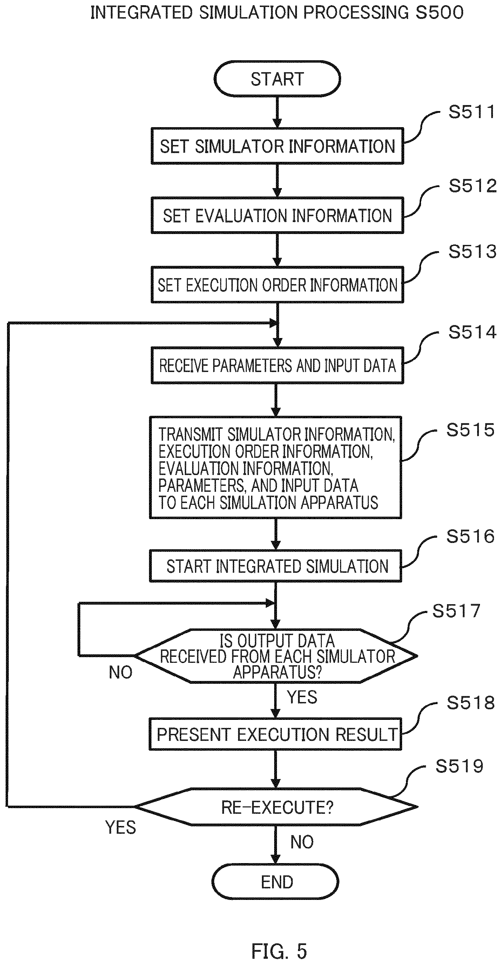

Fig. 5 is a flowchart for description of processing (hereinafter referred to as "integrated simulation processing S500") performed by the overall control equipment 10 when executing the integrated simulation. The integrated simulation processing S500 will be described below with reference to the drawing.

First, the simulator information setting unit 120 of the overall control equipment 10 generates and stores the simulator information 111 (S511).

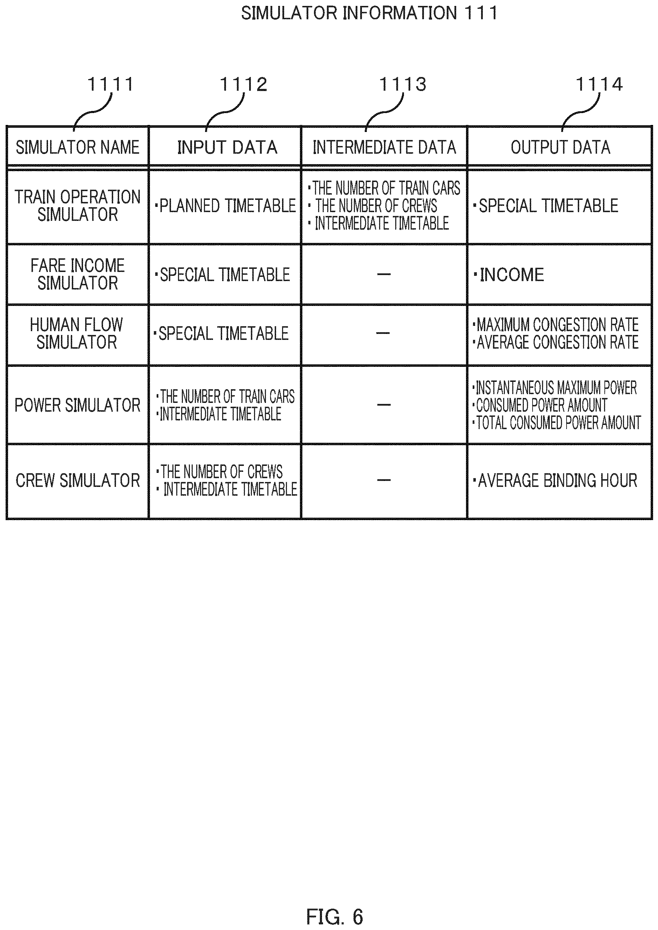

Fig. 6 illustrates an example of the simulator information 111. The simulator information 111 thus exemplarily illustrated includes a plurality of records (entries) each having items of a simulator name 1111, input data 1112, intermediate data 1113, and output data 1114. Each record of the simulator information 111 corresponds to one of the simulators.

The simulator name 1111 is set to the identifier (in the present example, the simulator name) of a simulator. The input data 1112 is set to information indicating the kind of the input data 216 of the simulator. The intermediate data 1113 is set to information indicating the kind of the intermediate data 217 generated by the simulator halfway through a simulation. The output data 1114 is set to information indicating the kind of the output data 218 generated by the simulator.

Subsequently, as illustrated in Fig. 5, the evaluation information setting unit 130 of the overall control equipment 10 generates and stores the evaluation information 112 (S512).

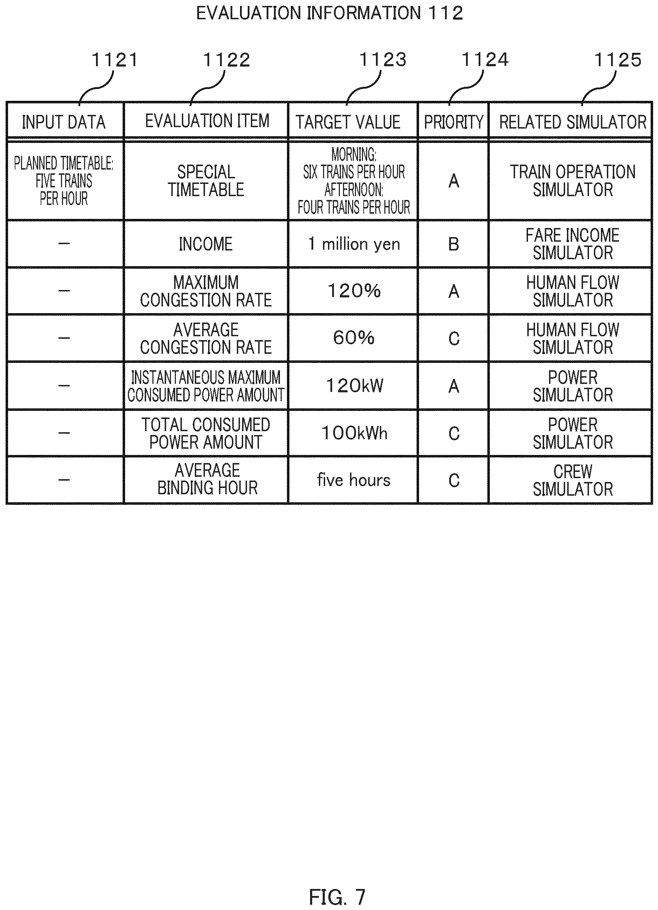

Fig. 7 illustrates an example of the evaluation information 112. The evaluation information 112 thus exemplarily illustrated includes a plurality of records (entries) each having items of input data 1121, an evaluation item 1122, a target value 1123, a priority 1124, and a related simulator 1125. Each record of the evaluation information 112 corresponds to one evaluation target item (hereinafter referred to as an "evaluation item").

The input data 1121 is set to the contents of the input data 115 of the integrated simulation. The evaluation item 1122 is set to information indicating an evaluation target item. The target value 1123 is set to a target value for the evaluation item. The priority 1124 is set to the priority of the evaluation item. The related simulator 1125 is set to the identifier (in the present example, the simulator name) of a simulator related to the evaluation item.

Subsequently, as illustrated in Fig. 5, the execution order information setting unit 140 of the overall control equipment 10 generates and stores the execution order information 113 (S513).

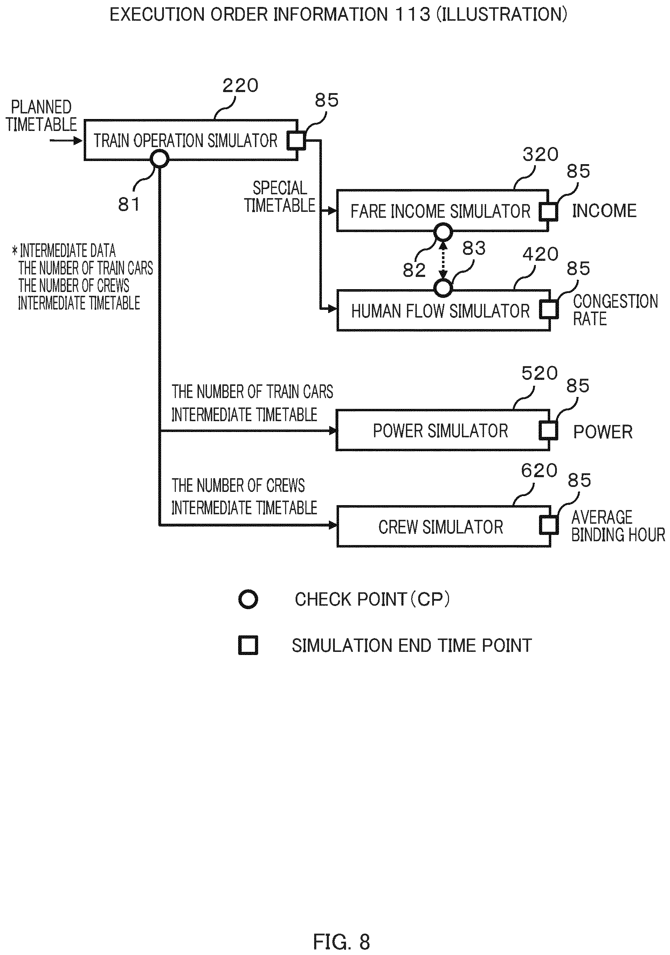

Fig. 8 illustrates an example of the execution order information 113. Note that, the drawing is illustration of the contents of the execution order information 113. As illustrated in the drawing, the execution order information 113 includes information indicating the execution order of each simulation in the integrated simulation.

In the integrated simulation thus exemplarily illustrated, first, the train operation simulation is executed by the train operation simulator 220 with a "planned timetable" as the input data 216. In the present example, the train operation simulator 220 generates a "special timetable" as the output data 218 through the simulation.

Thereafter, the fare income simulation is executed by the fare income simulator 320, the human flow simulation is executed by the human flow simulator 420, the power simulation is executed by the power simulator 520, and the crew simulation is executed by the crew simulator 620.

Circle symbols "O" illustrated with reference signs 81 to 83 in the drawing each indicate a check point (hereinafter referred to as a "CP") as a time point that is set halfway through a simulation. The CP is a time point upon which a subsequent simulation is activated. In the present example, the CP 81 is set halfway through the train operation simulation. In addition, the CP 82 is set halfway through the fare income simulation, and the CP 83 is set halfway through the human flow simulation.

When the train operation simulation reaches the CP 81, the intermediate data 217 is already generated and the power simulator 520 and the crew simulator 620 can execute the respective simulations using the intermediate data 217 already generated at the CP 81 without waiting for generation of the output data 218 by the train operation simulator 220. When its simulation being executed reaches the CP 81, the train operation simulator 220 passes the intermediate data 217 already generated at that time point to each simulation apparatus that executes a subsequent simulation, and the simulation apparatuses start the respective simulations (the power simulation and the crew simulation) with the passed intermediate data 217 as input. In the present example, the train operation simulator 220 generates "the number of train cars", "the number of crews", and an "intermediate timetable" as the intermediate data 217, passes "the number of train cars" and the "intermediate timetable" to the subsequent power simulator 520 as input, and passes "the number of crews" and the "intermediate timetable" to the following crew simulator 620 as input. The power simulator 520 starts the power simulation with "the number of train cars" and the "intermediate timetable" thus passed as input, and the crew simulator 620 starts the crew simulation with " the number of crew" and the "intermediate timetable" as input.

In this manner, when a preceding simulation reaches the CP 81, the intermediate data 217 already generated at that time point is passed to a subsequent simulation and the subsequent simulation is started, and thus a time taken for the overall simulation is reduced as a whole and the overall simulation can be efficiently executed.

The CP 82 illustrated in the drawing is set, for example, when failure such as fare income being equal to or smaller than a certain value has occurred in the fare income simulation by the fare income simulator 320. When the CP 82 is set (reached), for example, the fare income simulator 320 instructs parameter adjustment and simulation re-execution to the human flow simulator 420. The CP 83 is set, for example, when failure such as a congestion rate being equal to or higher than a certain value has occurred in the human flow simulation by the human flow simulator 420. When the CP 83 is set (reached), for example, the human flow simulator 420 instructs parameter adjustment and simulation re-execution to the fare income simulator 320.

In this manner, when the CP 82 or 83 is set upon occurrence of an event such as failure, one of the simulators instructs parameter adjustment and simulation re-execution to the other simulator, and thus an appropriate execution result (the output data 218) with an event such as failure taken into account can be returned to the overall control equipment 10 and the integrated simulation can be efficiently performed as a whole.

Each rectangle symbol "□" illustrated with reference sign 85 in Fig. 8 indicates the end time point of a corresponding simulation. In the present example, when having ended its simulation, the train operation simulator 220 passes a "special timetable" as the output data 218 to the subsequent fare income simulator 320 and the subsequent human flow simulator 420, and the fare income simulation and the human flow simulation are started with the passed output data 218 as input.

When having ended its simulation, each simulator transmits the generated output data 218 to the overall control equipment 10. In the present example, the train operation simulator 220 transmits a "special timetable" as the output data 218 to the overall control equipment 10, the fare income simulator 320 transmits "income" as the output data 218 to the overall control equipment 10, the human flow simulator 420 transmits a "congestion rate" as the output data 218 to the overall control equipment 10, the power simulator 520 transmits "power" as the output data 218 to the overall control equipment 10, and the crew simulator 620 transmits an "average binding hour" as the output data 218 to the overall control equipment 10.

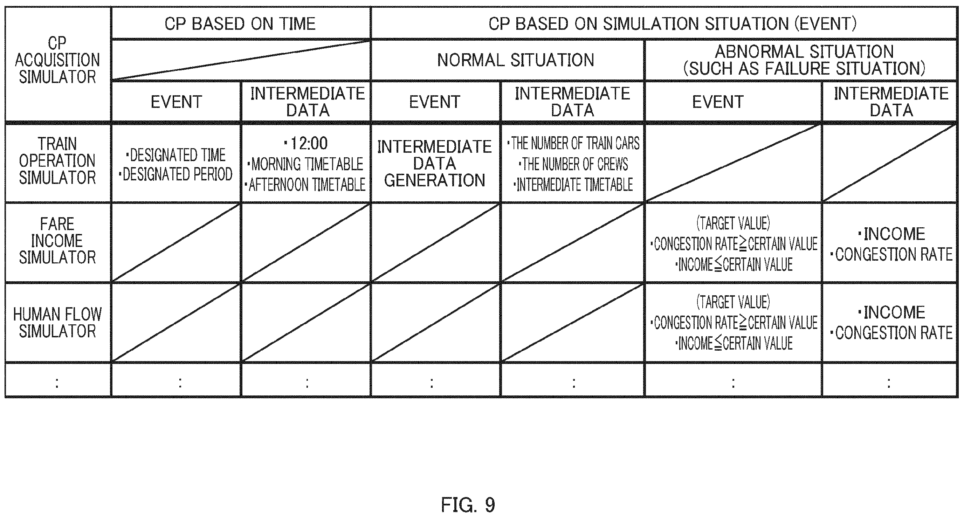

Fig. 9 illustrates examples of CPs. CPs can be set based on various viewpoints. CPs can be set based on, for example, a viewpoint of time and a viewpoint of simulation situation (event). Each row of the table illustrated in the drawing corresponds to one of the simulators as a CP setting target. Note that, the CP 81 illustrated in Fig. 8 corresponds to a "time point when the intermediate data 217 is acquired" in a "normal situation" among "CPs based on a simulation situation (event)" for the train operation simulator 220 on the first row in Fig. 9. The CP 82 exemplarily illustrated in Fig. 8 corresponds to "the congestion rate ≥ a certain value" or "the income ≤ a certain value" in an "abnormal situation" (failure situation) among "CPs based on a simulation situation (event)" for the fare income simulator 320 on the second row in Fig. 9. The CP 83 exemplarily illustrated in Fig. 8 corresponds to "the congestion rate ≥ a certain value" or "the income ≤ a certain value" in an "abnormal situation" (failure situation) among "CPs based on a simulation situation (event)" for the human flow simulator 420 on the third row in Fig. 9. Note that, in Fig. 9, a "designated time point (such as a time point when noon (12:00) is reached)" and a "designated period (such as a time point when processing of a morning timetable is ended or a time point when processing of an intermediate timetable is ended)" are additionally set as a "CP based on a viewpoint of time" to the train operation simulator 220.

In this manner, the user can set CPs based on various viewpoints. The user can perform such adjustment that the integrated simulation is executed efficiently and fast as a whole by appropriately setting CPs in accordance with the properties, characteristics, and the like of a simulator (simulation).

Subsequently, as illustrated in Fig. 5, the execution control unit 160 of the overall control equipment 10 receives, from the user through the user interface, the parameters 114 and the input data 115 to be used by each simulator when performing its simulation (S514). The parameters 114 may be automatically generated based on, for example, past actual values. Alternatively, the parameters 114 may be automatically generated by using a machine-learning model having completed learning with past actual values as learning data.

Subsequently, the execution control unit 160 refers to the execution order information 113 and transmits the simulator information 111 set at S511, the evaluation information 112 set at S512, the execution order information 113 set at S513, and the parameters 114 set at S514 to each simulation apparatus that performs a simulation in the integrated simulation (S515). Note that, the execution control unit 160 does not necessarily need to transmit all of the information to each simulation apparatus but only needs to transmit at least information needed to execute the integrated simulation.

Subsequently, the execution control unit 160 starts the integrated simulation (S516). For example, when the execution order information 113 has the contents illustrated in Fig. 8, the execution control unit 160 transmits an execution start instruction (activation instruction) to the train operation simulator 220 of the train operation management equipment 20, as a simulator that executes a simulation first.

Thereafter, the execution control unit 160 waits for reception of the output data 218 transferred from each simulator that executes a simulation in the integrated simulation (NO at S517).

After having received the output data 218 from all simulators that execute simulations in the integrated simulation (NO at S517), the execution control unit 160 generates information including an execution result based on the received output data 218 and outputs the generated information to the output device 105 (for screen display or the like) (S518).

Subsequently, the execution control unit 160 receives an instruction of whether to re-execute the integrated simulation from the user through the user interface (S519). When having received an instruction for the re-execution (YES at S519), the execution control unit 160 re-executes the processing from S514. Note that, the re-execution may be started at any processing among S511, S512, and S513. When the user does not instruct the re-execution (NO at S519), the integrated simulation processing S500 ends.

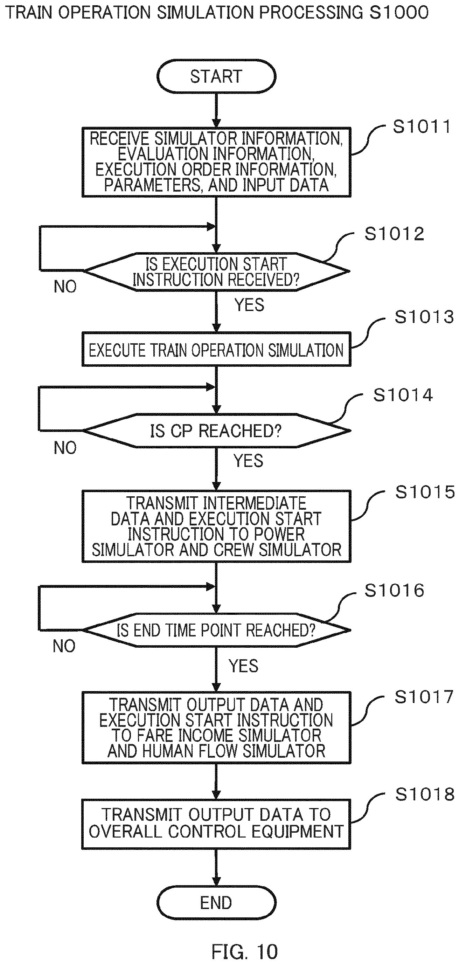

Fig. 10 is a flowchart for description of processing (hereinafter referred to as "train operation simulation processing S1000") related to the train operation simulation performed by the train operation simulator 220 having received the execution start instruction from the execution control unit 160 of the overall control equipment 10 at S516 in Fig. 5. The train operation simulation processing S1000 will be described below with reference to the drawing. Note that, the present example will be described for a case in which the execution order information 113 has the contents illustrated in Fig. 8.

The train operation simulator 220 receives the simulator information 111, the evaluation information 112, the execution order information 113, the parameters 114, and the input data 115 transmitted by the execution control unit 160 at S515 in Fig. 5 (S1011) and waits for reception of an execution start instruction to be transmitted by the execution control unit 160 at S516 in Fig. 5 (NO at S1012).

When having received the execution start instruction (YES at S1012), the train operation simulator 220 starts the train operation simulation with the received input data 115 as input (S1013).

Subsequently, when the processing reaches the CP 81 (YES at S1014), the train operation simulator 220 transmits the intermediate data 217 and an execution start instruction to the power simulator 520 and the crew simulator 620 (S1015).

Subsequently, when the train operation simulation ends (YES at S1016), the train operation simulator 220 transmits the output data 218 and an execution start instruction to the fare income simulator 320 and the human flow simulator 420 (S1017).

Subsequently, the train operation simulator 220 transmits the output data 218 to the overall control equipment 10 (S1018).

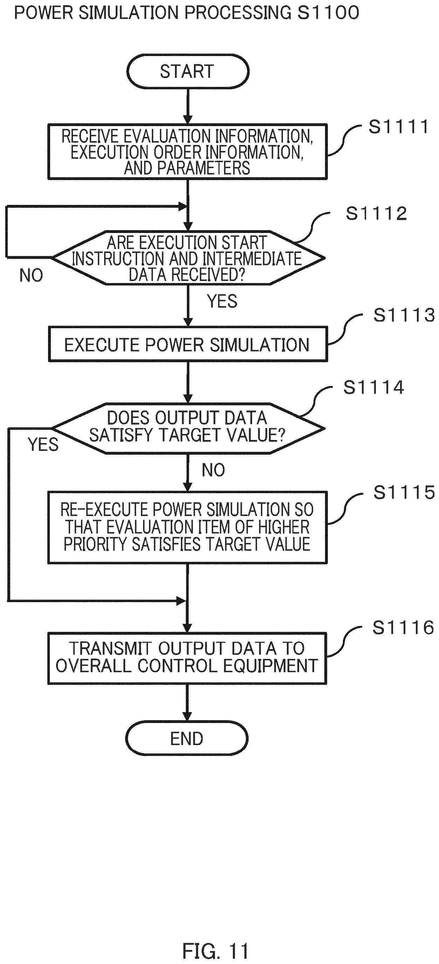

Fig. 11 is a flowchart for description of processing (hereinafter referred to as "power simulation processing S1100") related to the power simulation performed by the power simulator 520. The power simulation processing S1100 will be described below with reference to the drawing.

The power simulator 520 receives the evaluation information 112, the execution order information 113, and the parameters 114 transmitted by the execution control unit 160 at S515 in Fig. 5 (S1111), and thereafter, waits for reception of the intermediate data 217 and the execution start instruction to be transmitted by the train operation simulator 220 at S1015 in Fig. 10 (NO at S1112).

When having received the execution start instruction and the intermediate data 217 (YES at S1112), the power simulator 520 executes the power simulation with the received intermediate data 217 as input (S1113).

Subsequently, the power simulator 520 determines whether an execution result of the power simulation satisfies a target value of the evaluation information 112 (S1114). When the above-described execution result satisfies the target value of the evaluation information 112 (YES at S1114), the process proceeds to S1116. When the above-described execution result does not satisfy the target value of the evaluation information 112 (NO at S1114), the power simulator 520 adjusts the parameters 214 so that a predetermined number of evaluation items in descending order of the priority satisfy the target value, and then re-executes the power simulation (S1115).

At S1116, the power simulator 520 generates the output data 218 including the execution result and transmits the generated output data 218 to the overall control equipment 10. Note that, in a case in which the power simulation is re-executed, the power simulator 520 may transmit both the output data 218 including the initial execution result and the output data 218 including an execution result of the re-execution to the overall control equipment 10.

For example, consider a case in which the power simulator 520 receives "the number of train cars" and an "intermediate timetable" as the intermediate data 217 at S1112 and evaluates evaluation items of instantaneous maximum power and total consumed power amount through the power simulation. When at least any of these evaluation items does not satisfy its target value, the power simulator 520 adjusts the parameters 214 so that, for example, the evaluation item "instantaneous maximum power", which has a priority higher than that of the evaluation item "total consumed power amount", satisfies its target value, and then re-executes the simulation. Examples of methods of adjusting the parameters 214 in this case include a method of reducing the number of simultaneously traveling trains and a method of matching the timing of power generation by a regenerative brake of a train and the timing of power use at start of train movement.

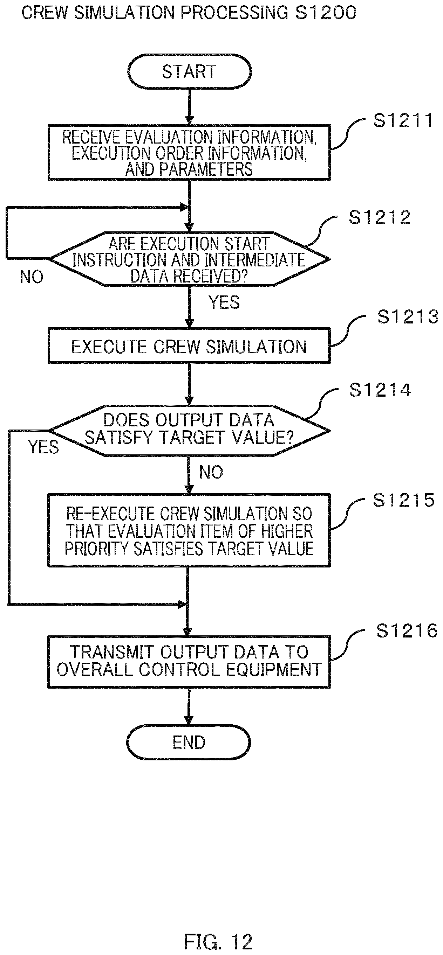

Fig. 12 is a flowchart for description of processing (hereinafter referred to as "crew simulation processing S1200") related to the crew simulation performed by the crew simulator 620. The crew simulation processing S1200 will be described below with reference to the drawing.

The crew simulator 620 receives the evaluation information 112, the execution order information 113, and the parameters 114 transmitted by the execution control unit 160 at S515 in Fig. 5 (S1211), and thereafter, waits for reception of the execution start instruction and the intermediate data 217 to be transmitted by the train operation simulator 220 at S1015 in Fig. 10 (NO at S1212).

When having received the execution start instruction and the intermediate data 217 (YES at S1212), the crew simulator 620 executes the crew simulation with the received intermediate data 217 as input (S1213).

Subsequently, the crew simulator 620 determines whether an execution result of the crew simulation satisfies a target value of the evaluation information 112 (S1214). When the above-described execution result satisfies the target value of the evaluation information 112 (YES at S1214), the process proceeds to S1216. When the above-described execution result does not satisfy the target value of the evaluation information 112 (NO at S1214), the crew simulator 620 adjusts the parameters so that a predetermined number of evaluation items in descending order of the the priority satisfies the target value, and then re-executes the simulation (S1215).

At S1216, the crew simulator 620 generates the output data 218 including the execution result and transmits the generated output data 218 to the overall control equipment 10. Note that, in a case in which the crew simulation is re-executed, the crew simulator 620 may transmit both the output data 218 including the initial execution result and the output data 218 including an execution result of the re-execution to the overall control equipment 10.

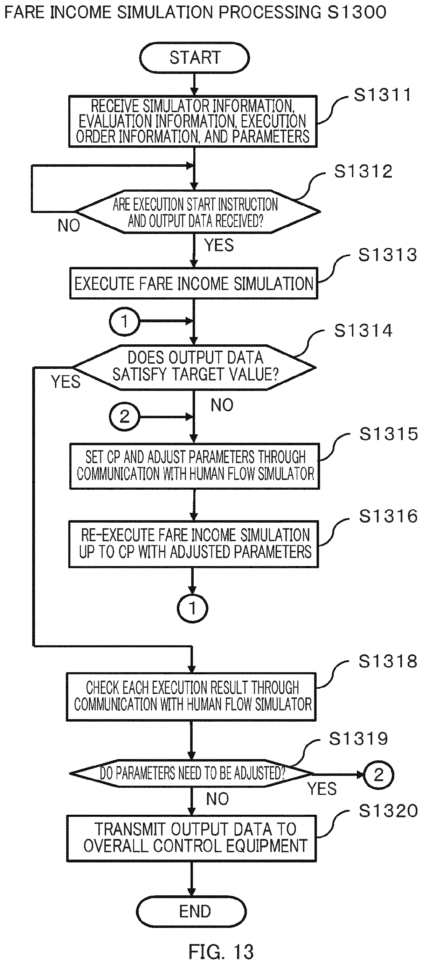

Fig. 13 is a flowchart for description of processing (hereinafter referred to as "fare income simulation processing S1300") related to the fare income simulation performed by the fare income simulator 320. The fare income simulation processing S1300 will be described below with reference to the drawing.

The fare income simulator 320 receives the simulator information 111, the evaluation information 112, the execution order information 113, and the parameters 114 transmitted by the execution control unit 160 at S515 in Fig. 5 (S1311), and thereafter, waits for reception of the execution start instruction and the output data 218 to be transmitted by the train operation simulator 220 at S1017 in Fig. 10 (NO at S1312) .

When having received the execution start instruction and the output data 218 (YES at S1312), the fare income simulator 320 executes the fare income simulation with the received output data 218 as input (S1313).

Subsequently, the fare income simulator 320 determines whether an execution result of the fare income simulation satisfies a target value of the evaluation information 112 (S1314). When the above-described execution result satisfies the target value of the evaluation information 112 (YES at S1314), the process proceeds to S1318. When the above-described execution result does not satisfy the target value of the evaluation information 112 (NO at S1314), the process proceeds to S1315.

At S1315, the fare income simulator 320 sets the CP 82 and adjusts the parameters 214 through communication with the human flow simulator 420. Subsequently, the fare income simulator 320 re-executes the fare income simulation up to the CP 82 by using the adjusted parameters 214 (S1316). Thereafter, the process returns to S1314.

At S1318, the fare income simulator 320 checks each execution result through communication with the human flow simulator 420 and determines whether the parameters 214 need to be adjusted (S1319). The process returns to the processing at S1315 when the parameters 214 need to be adjusted (YES at S1319), or the process proceeds to the processing at S1320 when the parameters 214 do not need to be adjusted (NO at S1319) .

At S1320, the fare income simulator 320 generates the output data 218 including the execution result of the fare income simulation and transmits the generated output data 218 to the overall control equipment 10.

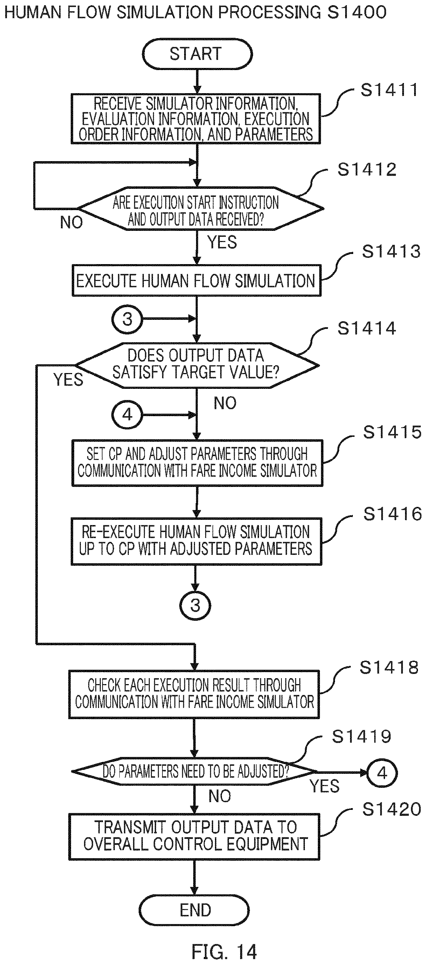

Fig. 14 is a flowchart for description of processing (hereinafter referred to as "human flow simulation processing S1400") related to the human flow simulation performed by the human flow simulator 420. The human flow simulation processing S1400 will be described below with reference to the drawing.

The human flow simulator 420 receives the simulator information 111, the evaluation information 112, the execution order information 113, and the parameters 114 transmitted by the execution control unit 160 at S515 in Fig. 5 (S1411), and thereafter, waits for reception of the execution start instruction and the output data 218 to be transmitted by the train operation simulator 220 at S1017 in Fig. 10 (NO at S1412) .

When having received the execution start instruction and the output data 218 (YES at S1412), the human flow simulator 420 executes the human flow simulation with the received output data 218 as input (S1413).

Subsequently, the human flow simulator 420 determines whether an execution result of the human flow simulation satisfies a target value of the evaluation information 112 (S1414). When the above-described execution result satisfies the target value of the evaluation information 112 (YES at S1414), the process proceeds to S1418. When the above-described execution result does not satisfy the target value of the evaluation information 112 (NO at S1414), the process proceeds to S1415.

At S1415, the human flow simulator 420 sets the CP 83 and adjusts the parameters 214 through communication with the fare income simulator 320. Subsequently, the human flow simulator 420 re-executes the human flow simulation up to the CP 83 by using the adjusted parameters 214 (S1416). Thereafter, the process returns to S1414.

At S1418, the human flow simulator 420 checks each execution result through communication with the fare income simulator 320 and determines whether the parameters 214 need to be adjusted (S1419). The process returns to the processing at S1415 when the parameters 214 need to be adjusted (YES at S1419), or the process proceeds to the processing at S1420 when the parameters 214 do not need to be adjusted (NO at S1419) .

At S1420, the human flow simulator 420 generates the output data 218 including the execution result of the human flow simulation and transmits the generated output data 218 to the overall control equipment 10.

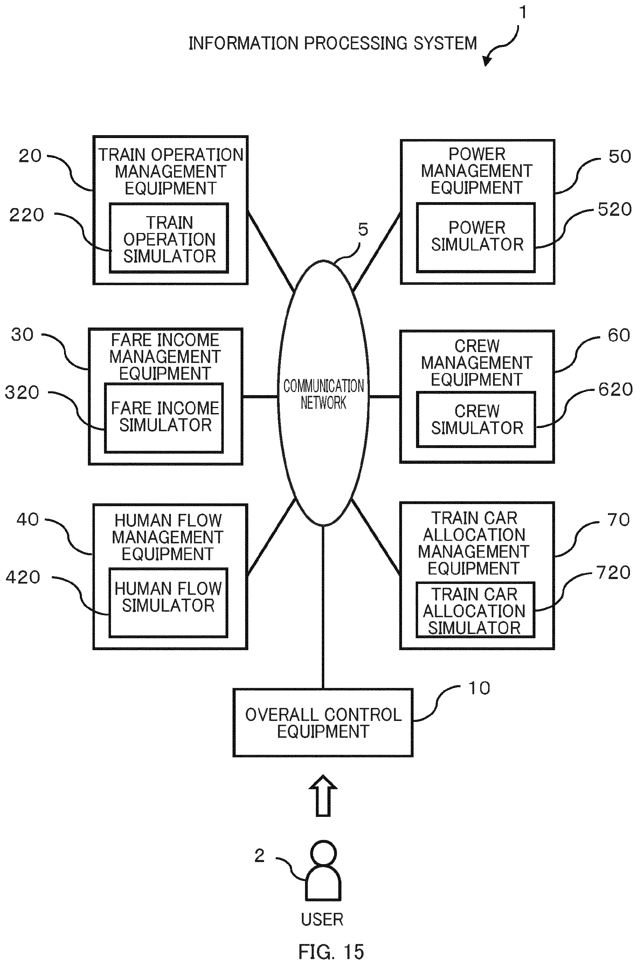

Note that, since human flow is largely affected by fare change, the fare income simulation and the human flow simulation have a close relation. The following considers processing examples of Figs. 14 and 15 in which the fare income simulator 320 and the human flow simulator 420 receive a "special timetable" as the output data 218 from the train operation simulator 220 at S1311 and S1411, the fare income simulation evaluates the evaluation item of "fare income", and the human flow simulation evaluates the evaluation items of "maximum congestion rate" and "average congestion rate". When at least any of these evaluation items does not satisfy its target value, the fare income simulator 320 or the human flow simulator 420 sets the CP 82 or the CP 83 to a time point when, for example, evaluation values of the evaluation items are calculated by simulations, and the fare income simulator 320 and the human flow simulator 420 adjust the parameters 214. Note that, in this case, the fare income simulator 320 and the human flow simulator 420 performs the above-described adjustment while considering the priority of each evaluation item, and for example, adjusts the parameters 214 in a direction in which the maximum congestion rate is lowered because the fare income decreases by lowering a fare in a target time slot but the priority of the maximum congestion rate is higher than that of the fare income.

As described above in detail, when a simulation included in the integrated simulation reaches a CP in execution of the integrated simulation, the information processing system 1 of the present embodiment executes the other simulations included in the integrated simulation by using intermediate data already generated at that time point. In a case in which a CP is set upon an event such as failure, parameters are adjusted, processing up to the CP is re-executed, and a result of the execution is notified to the overall control equipment 10. Accordingly, the integrated simulation can be performed efficiently and fast as a whole.

The information processing system 1 of the present embodiment is also easily applicable to a case in which the number (kinds) of simulations included in the integrated simulation is changed.

For example, consider a case in which the information processing system 1 newly incorporates the train car allocation management equipment 70 including a train allocation simulator 720 configured to perform a simulation (hereinafter referred to as a "train car allocation simulation") related to train car allocation (planning of a train car schedule) as illustrated in Fig. 15. In this case, the user 2 can easily reset the integrated simulation to incorporate the train car allocation simulation by setting the simulator information 111, the evaluation information 112, and the execution order information 113 (including CP settings).

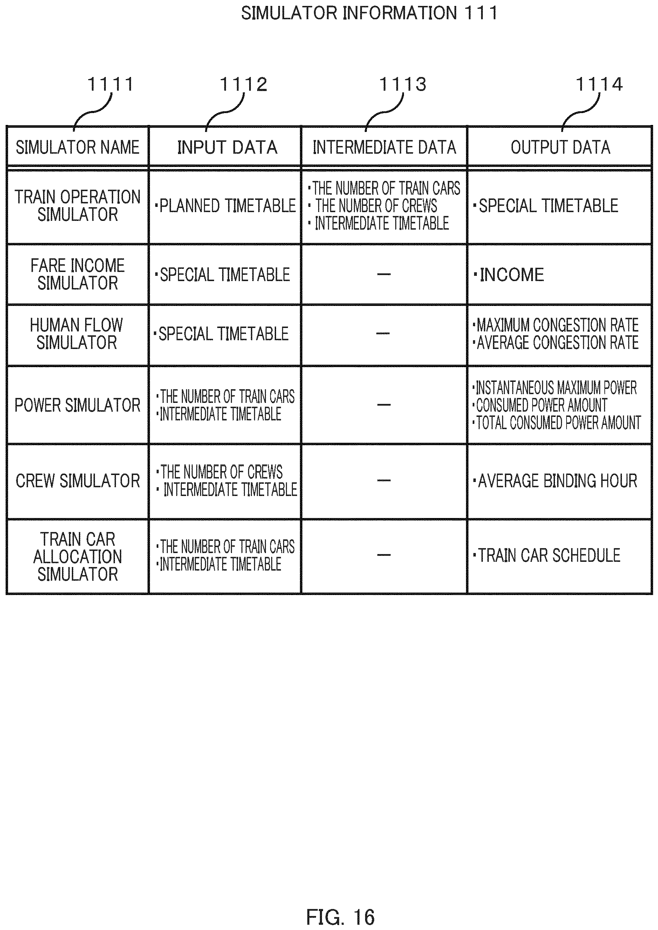

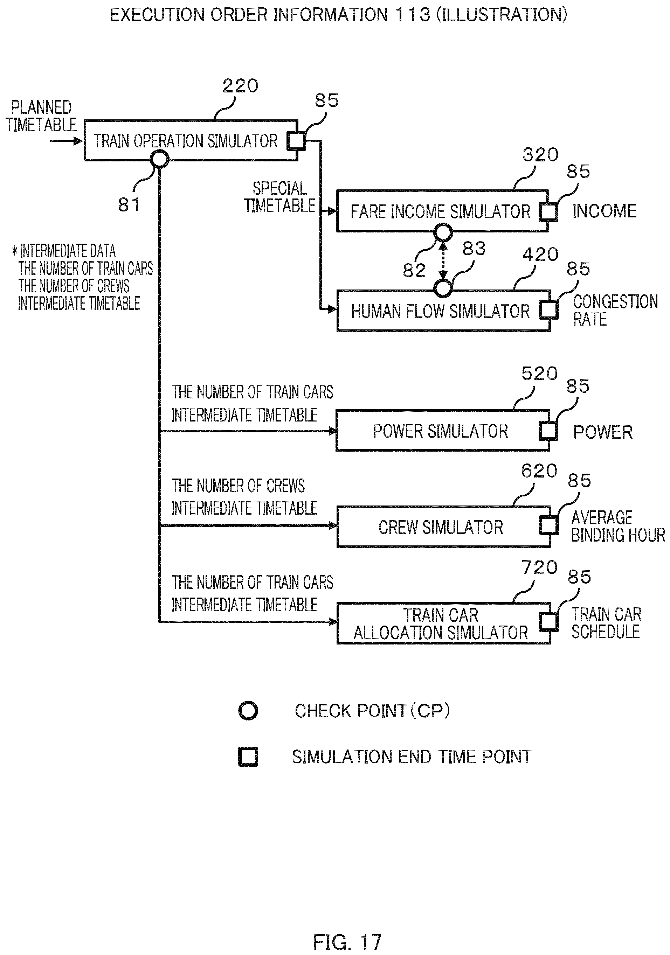

Fig. 16 illustrates an example in which the train car allocation simulation is added to the simulator information 111 exemplarily illustrated in Fig. 6, and Fig. 17 illustrates an example in which the train allocation simulator 720 is added to the execution order information 113 exemplarily illustrated in Fig. 8.

Although the embodiment of the present invention is described above, the present invention is not limited to the above-described embodiment but includes various modifications. For example, the embodiment describes configurations in detail for clear understanding of the present invention and is not necessarily limited to a case in which all described configurations are provided. Some of the configurations of the embodiment may be subjected to addition, deletion, and replacement with other configurations.

Some or all of the above-described configurations, functions, processing units, processing means, and the like may be implemented by hardware, for example, in designing with integrated circuits. Alternatively, the implementation may be achieved by program codes of software that implements functions described in the embodiment. In such a case, a storage medium in which the program codes are recorded is provided in an information processing apparatus (computer), and a processor included in the information processing apparatus reads the program codes stored in the storage medium. In this case, the functions of the above-described embodiment are implemented by the program codes read from the storage medium, and thus the program codes and the storage medium in which the program codes are stored are included in the present invention. Examples of such storage media for supplying program codes include a hard disk, a solid state drive (SSD), an optical disk, a magneto optical disc, a CD-R, a flexible disk, a CD-ROM, a DVD-ROM, a magnetic tape, a non-volatile memory card, and a ROM.

In the above-described embodiment, only control lines and information lines that are thought to be necessary for sake of description are presented, and not necessarily all control lines and information lines of a product are presented. All components may be mutually coupled. Moreover, various kinds of information are exemplarily presented above in the format of a table, but may be managed in a format other than a table.

### [Reference Signs List]

1 information processing system
2 user
5 communication network
10 overall control equipment
110 storage unit
111 simulator information
112 evaluation information
113 execution order information
114 parameter
115 input data
116 output data
120 simulator information setting unit
20 train operation management equipment
210 storage unit
211 simulation information
212 evaluation information
213 execution order information
214 parameter
215 unique information
216 input data
217 intermediate data
218 output data
30 fare income management equipment
40 human flow management equipment
50 power management equipment
60 crew management equipment
100 information processing apparatus
130 evaluation information setting unit
140 execution order information setting unit
150 parameter setting unit
160 execution control unit
170 communication processing unit
180 execution result presentation unit
220 train operation simulator
320 fare income simulator
420 human flow simulator
520 power simulator
620 crew simulator
720 train allocation simulator
S500 integrated simulation processing
S1000 train operation simulation processing
S1100 power simulation processing
S1200 crew simulation processing
S1300 fare income simulation processing
S1400 human flow simulation processing

## Claims

1. An information processing system configured to execute a plurality of simulations in cooperation, the plurality of simulations being executed by a plurality of simulators, respectively, coupled to one another to perform communication, the information processing system being configured to:
store execution order information that is information indicating execution orders of the plurality of simulations; and
perform execution control of the simulations except for one simulation when the one simulation has reached a check point at a time point halfway through execution of the one simulation.

2. The information processing system according to claim 1, wherein
each of the simulators generates output data by executing a corresponding one of the simulations based on input data that is data input at execution start, and
when a first simulation of the simulations has reached the check point, intermediate data that is data generated by the first simulation through execution up to the check point is input as the input data to a second simulation of the simulations and the second simulation is executed.

3. The information processing system according to claim 2, wherein the execution order information is set so that the second simulation is executed following the first simulation.

4. The information processing system according to claim 1, wherein
when a first simulation has reached the check point, a second simulation of the simulations is re-executed, and
when the second simulation has reached the check point, the first simulation is re-executed.

5. The information processing system according to claim 4, wherein the check point is set when an execution result of the corresponding simulation does not satisfy a target value set in advance.

6. The information processing system according to claim 4, wherein
at the re-execution of the first simulation, a parameter to be used by the simulation when executed is reset, and
at the re-execution of the second simulation, a parameter to be used by the simulation when executed is reset.

7. The information processing system according to claim 6, wherein
a plurality of evaluation items for which a result of each of the simulations is evaluated, a target value set for each of the evaluation items, and a priority set for each of the evaluation items are stored, and
the parameters are reset so that the execution result of the simulation for any of the evaluation items, the priority of which is higher satisfies the target value in priority.

8. The information processing system according to claim 1, wherein the check point is set based on a viewpoint of time or a viewpoint of situation of the corresponding simulation.

9. The information processing system according to claim 1, further comprising a user interface for a user to set the check point.

10. A control method for an information processing system configured to execute a plurality of simulations in cooperation, the plurality of simulations being executed by a plurality of simulators, respectively, coupled to one another to perform communication, the control method being configured to cause the information processing system to execute:
storing execution order information that is information indicating execution orders of the plurality of simulations; and
performing execution control of the simulations except for one simulation when the one simulation has reached a check point at a time point halfway through execution of the one simulation.
